# EUROPÄISCHE PATENTSCHRIFT

(11) **EP 3 648 966 B1**
(45) Veröffentlichungstag und Bekanntmachung des Hinweises auf die Patenterteilung: **18.08.2021**
(21) Anmeldenummer: 18723454.7
(22) Anmeldetag: 04.05.2018
(51) Int. Cl.: B32B 5/14, B21D 22/00, B23K 11/00, B23K 20/12, B29C 65/44, B23K 31/02, B23K 35/02, B32B 5/24, B32B 3/28

(54) **FAHRZEUGSTRUKTUR MIT OPTIMIERTEM CRASHVERHALTEN**
VEHICLE STRUCTURE HAVING AN OPTIMIZED CRASH PERFORMANCE
STRUCTURE DE VÉHICULE AVEC COMPORTEMENT OPTIMISÉ EN CAS DE COLLISION

(30) Priorität: 01.07.2017 DE 102017006272
(43) Veröffentlichungstag der Anmeldung: 13.05.2020
(73) Patentinhaber: Audi AG, 85045 Ingolstadt (DE)
(72) Erfinder: JÄSCHKE, Anja, 92339 Beilngries (DE); MORGENEYER, Thomas, 73441 Bopfingen (DE); MECKEL-JONAS, Claudia, 40597 Düsseldorf (DE)
(86) Internationale Anmeldenummer: PCT/EP2018/061451
(87) Internationale Veröffentlichungsnummer: WO 2019/007565

(56) Entgegenhaltungen:
- EP-A1- 2 860 407
- WO-A1-2014/191228

## Beschreibung

Die Erfindung betrifft ein Strukturbauteil, insbesondere für ein Kraftfahrzeug mit optimiertem Crashverhalten, Verfahren zur Herstellung des Strukturbauteils und die Verwendung des Strukturbauteils als im Crashfall tragende Fahrzeugstruktur.

In der Fahrzeugindustrie werden für die Karosserie Bauteile eingesetzt, die dem Fahrzeug Stabilität und Steifigkeit verleihen und im Falle eines Unfalls Energie aufnehmen und den Insassen einen Überlebensraum sichern. Ebenso werden im Fahrwerk eines Kraftfahrzeugs vermehrt Bauteile eingesetzt, die neben Steifigkeit und dynamischer Belastbarkeit insbesondere hohe Anforderungen an eine definierte Verformbarkeit aber auch an die Wirtschaftlichkeit stellen. Eine definierte Verformbarkeit kann beispielsweise durch eine gezielte Verstärkung eines Strukturbauteils mit einem lokal unterschiedlichen Verstärkungsgrad eingestellt werden. Damit kann beispielsweise das Knickverhalten einer A-, B- oder C-Säule im Crashverhalten beeinflusst werden.

Es sind bereits verschiedene Varianten von Strukturbauteilen mit einem lokal unterschiedlichen Verstärkungsgrad vorgeschlagen worden. Beispielsweise wurden verschiedene Verfahren vorgeschlagen, um Zonen unterschiedlicher Duktilität in Metallbauteilen zu erzeugen.

DE 10 2015 112 327 A1 offenbart ein Karosserie- oder Fahrwerkbauteil für ein Kraftfahrzeug mit einem dreilagigen Blechverbund mit einer Mittellage und zwei die Mittellage nach außen begrenzenden Außenlagen, welche mit der Mittellage flächig und stoffschlüssig verbunden sind. Die Außenlagen bestehen aus einer nichtrostenden Stahllegierung mit einem ferritischen, austenitischen oder martensitischen Gefüge und die Mittellage aus einer vergütbaren Stahllegierung.

Aus der DE 10 2008 021 492 B3 sind pressgehärtete Blechbauteile mit abgegrenzten weichen Bauteilbereichen für den Einsatz in crashoptimierten Kraftfahrzeugen bekannt. Es wird das Herstellen von gehärteten Bauteilen aus härtbarem Stahl beschrieben, wobei die Bauteile in definierten Bereichen eine höhere Duktilität aufweisen als in anderen Bereichen.

Aus der DE 197 43 802 C2 ist bekannt, zur Herstellung eines metallischen Formbauteils für Kraftfahrzeugkomponenten eine Platine aus härtbarem Stahl bereitzustellen, diese Platine zunächst homogen zu erwärmen und anschließend Teilbereiche des Formbauteils schnell induktiv zu erwärmen.

Bei einem weiteren, aus der DE 197 23 655 B4 bekannten Verfahren zur Herstellung eines Stahlblechprodukts erfolgt ein Härten des Produkts durch schnelles Abkühlen von der austenitischen Temperatur, während es in einem Werkzeug ist, wobei in dem Produkt ungehärtete Bereiche verbleiben und die Bereiche getempert werden, nachdem das Produkt aus dem Werkzeug entnommen wurde.

Außerdem ist aus der DE 10 2008 030 297 A1 ein Verfahren zur Herstellung eines Formbauteils mit mindestens zwei Gefügebereichen mit unterschiedlicher Duktilität aus einem Bauteilrohling aus härtbarem Stahl bekannt, wobei der Bauteilrohling bereichsweise unterschiedlich erwärmt und dann in einem Werkzeug geformt und bereichsweise gehärtet wird.

EP 2 710 157 B1 offenbart ein Verfahren zur Wärmebehandlung eines härtbaren Blechbauteils für ein Kraftfahrzeug, bei dem das Blechbauteil zunächst in einem Umformpresswerkzeug pressgehärtet wird und anschließend durch lokales Tempern vorgegebener Teilbereiche des Blechteils durch ein Laserstrahlverfahren lokal begrenzte weiche Bereiche des Blechteils erzeugt werden.

Auch Strukturbauteile mit einem lokal unterschiedlichen Verstärkungsgrad in Hybridbauweise, die Kunststoffe als Verstärkungselement enthalten, sind bereits bekannt geworden.

DE 10 2014 225 576 A1 offenbart ein Verbundbauteil aus einem ersten partiell gehärteten Stahlwerkstück, einem zweiten Metallwerkstück und einem dazwischen angeordneten Kunststoff. Der Kunststoff ist als Kunststoffschicht ausgebildet und im Wesentlichen vollflächig stoffschlüssig mit dem ersten Stahlwerkstück und mit dem zweiten Metallwerkstück verbunden. Die Variation des Verstärkungsgrads wird durch die bereichsweise unterschiedliche Duktilität des Stahlwerkstücks erzeugt.

Aus der DE 10 2011 009 892 A1 ist ein Kraftfahrzeugbauteil bekannt, bei dem ein metallischer Grundkörper mit einem Verstärkungselement aus Faserverbundwerkstoff gekoppelt ist. Die Koppelung ist durch das Matrixharz des Faserverbundwerkstoffes hergestellt und zwischen dem Verstärkungselement und Grundkörper ist ein Vlies angeordnet. Eine Anpassung des Verstärkungsgrads an die jeweiligen Crashanforderungen in den crashrelevanten Bereichen erfolgt über die Wandstärke des Faserverbundwerkstoffs.

Die EP 2 860 407 A1 offenbart ein Strukturbauteil umfassend ein erstes Bauteil und ein zweites Bauteil, weiterhin umfassend zumindest ein Verbindungsstück aus Metall, wobei das Verbindungsstück zumindest über die gesamte Dicke des ersten Bauteils das erste Bauteil durchdringt. Das erste Bauteil kann aus Kunststoff oder aus einem Faserverbundmaterial bestehen, insbesondere einer Kunststoffplatte oder einer Faserverbundplatte.

Die WO 2014/91228 A1 offenbart ein Verfahren zur Herstellung von Urethan-(meth)acrylaten, welche als strahlungshärtbare Beschichtungsmassen z.B. für die Beschichtung von Substraten wie Holz, Papier, Textil, Leder, Vlies, Kunststoffoberflächen, PVC, Glas, Keramik verwendbar sind.

EP 0 523 786 A1 offenbart ein Strukturbauteil enthaltend eine Verstärkungsschicht basierend auf einem Faserverbundmaterial, worin die Matrixkompomente durch Elektronenstrahlung härtbar ist, und die Verwendung eines so hergestellten Strukturbauteils in Fahrzeugen.

Es wurde nun gefunden, dass sich ein bereichsweise unterschiedlicher Verstärkungsgrad auch erhalten lässt, indem die Festigkeit der Verstärkungsschicht variiert wird. So kann beispielsweise bei einer Kunststoff enthaltenden Verstärkungsschicht bei konstanter Schichtdicke der E-Modul der Kunststoffmatrix bereichsweise unterschiedlich groß sein. Dies entspricht einem Einbau gezielter Schwachstellen für das Versagen. Im Crashfall erfolgt ein Falten des Strukturbauteils an den Schwachstellen. Dadurch wird mehr Energie abgebaut als durch ein Ausknicken des Bauteils beim Versagen. Eine Aufgabe der Erfindung war die Bereitstellung eines Strukturbauteils mit optimiertem Crashverhalten, das hohe Energieaufnahme im Crashfall mit geringem Raumbedarf verbindet. Eine weitere Aufgabe der Erfindung bestand darin, ein einfaches Verfahren zur Herstellung solcher Strukturbauteile zur Verfügung zu stellen.

Die Erfindung betrifft ein Strukturbauteil, insbesondere für ein Kraftfahrzeug mit optimiertem Crashverhalten, Verfahren zu dessen Herstellung und die Verwendung des Strukturbauteils. Kraftfahrzeuge im Sinne der Erfindung schließen Nutzfahrzeuge ein.

Ein Gegenstand der Erfindung ist ein Strukturbauteil, insbesondere für ein Kraftfahrzeug, umfassend mindestens ein zu verstärkendes Element und mindestens eine mit einer Oberfläche des Elements verbundene Verstärkungsschicht, die aus einem Faserverbundmaterial besteht, das eine strahlenhärtbare Polymermatrixkomponente aufweist, wobei die Verstärkungsschicht wenigstens zwei Bereiche unterschiedlicher Festigkeit aufweist und die Grenzen zwischen den Bereichen unterschiedlicher Festigkeit im Wesentlichen senkrecht zur Oberfläche des zu verstärkenden Elements verlaufen. In einer Ausführungsform erstreckt sich jeder Bereich über die gesamte Dicke der Verstärkungsschicht. In einer weiteren Ausführungsform verlaufen die Grenzen zwischen den Bereichen unterschiedlicher Festigkeit im Wesentlichen senkrecht zur Oberfläche des Elements, mit der die Verstärkungsschicht verbunden ist.

Das erfindungsgemäße Strukturbauteil führt im Crashfall zu höherem Energieabbau beim Versagen des Bauteils. Anstatt auszuknicken wird das erfindungsgemäße Strukturbauteil gezielt gefaltet. Man gewinnt daher auch bei der Auslegung des erfindungsgemäßen Strukturbauteils Bauraum, bzw. es wird auf kleinem Bauraum deutlich mehr Energie abgebaut.

Das erfindungsgemäße Strukturbauteil ist verzugsarm, da im Bauteil keine kompakte Reaktion stattfindet. Es zeigt eine deutliche Reduzierung der Eigenspannungen, des Rückfederns und des Verzuges.

Beim Umformen des erfindungsgemäßen Strukturbauteils kann kostengünstiges Material (PA, PP, PE) für die Stempel eingesetzt werden. Damit ist eine Innenkonturbildung möglich und eine schnelle Bearbeitung der Werkzeuggeometrie und eine kurze Bearbeitungszeit. Dies ermöglicht auch die schnelle Herstellung von Versuchs- und Prototypenbauteilen sowie kostengünstige Kleinserien.

Das erfindungsgemäße Strukturbauteil ermöglicht zudem ein Einbringen von Verstärkungs- und Verbindungselementen ohne zusätzlichen Haftvermittler.

Das zu verstärkende Element kann ein Strukturbauteil, Karosseriebauteil oder Fahrzeugprofil sein. In einer Ausführungsform ist das zu verstärkende Element eine im Crashfall tragende Fahrzeugstruktur oder ein Teil davon. Beispiele schließen Bodenblech, Längsträger, Crashbox, Querträger, Schweller, A-, B-, C-, D-Säule, Querlenker oder Torsionsträger ein.

In einer Ausführungsform umfasst die mindestens eine mit einer Oberfläche des Elements verbundene Verstärkungsschicht eine Blechverstärkung, die gezielt Schwachstellen enthält und über eine Kunststoffkomponente an dem zu verstärkenden Element befestigt ist. Die Verstärkung kann auf das zu verstärkende Element oder die Verstärkungsschicht geklebt, oder daran fixiert sein, beispielsweise mittels Kunststoff, durch Laserschweißen oder Punkten. In einer Ausführungsform werden Sandwichstrukturen auf das zu verstärkende Element, z.B. ein Metallprofil, aufgebracht.

In einer Ausführungsform besteht die mindestens eine mit einer Oberfläche des Elements verbundene Verstärkungsschicht aus einem Faserverbundmaterial. Das Faserverbundmaterial kann ein faserverstärktes Kunststoffmaterial sein, das stärkere und schwächere Aushärtezonen aufweist. Die Festigkeit der Aushärtezonen kann bei einem 2-Komponenten-Kunststoff über den Härteranteil gesteuert werden; oder bei Thermoplast-Matten über den Matrixanteil.

In einer Ausführungsform wird auf eine innenliegende Oberfläche eines Strukturbauteils, Karosseriebauteils oder Fahrzeugprofils mindestens eine mit aushärtbarem Kunststoff getränkte Faserlage aufgebracht und anschließend gezielt gehärtet, so dass Bereiche mit unterschiedlichen Festigkeiten entstehen, die gezielt zum Abbau von Energie führen.

Durch diese Technik ist es insbesondere möglich, weiche Übergange von steifen und weniger steifen Bereichen zu realisieren. Damit lassen sich Steifigkeitssprünge vermeiden, die zu ungewünschtem Versagen führen. Diese Flexibilität der Technologie ist ein großen Vorteil gegenüber den bereits bekannten Ausführungen. Ein so gefertigtes Bauteil lässt sich zudem schnell und kosteneffizient anpassen, wenn Bauteile in seiner Umgebung geändert werden.

In einer Ausführungsform befindet sich in einem drapierfähigen Aufbau ein mit einem härtbaren Harz getränkter Faseraufbau. Der Aufbau wird in ein Karosserieteil eingelegt und mittels einfachem Stempel oder Werkzeug umgeformt und an das Bauteil angedrückt, bevor oder während das härtbare Harz, welches bereits im Aufbau vorhanden sein oder während bzw. nach dem Schließvorgang injiziert werden kann, unterschiedlich stark aushärtet. Anschließend und/oder während der Formgebung wird das härtbare Harz vernetzt und damit eine Verstärkungsschicht im Karosseriebauteil gebildet, die mindestens zwei Bereiche mit unterschiedlicher Festigkeit aufweist.

In einer weiteren Ausführungsform befindet sich in einem drapierfähigen Aufbau ein mit einem härtbaren Harz getränktes Abstandsgelege. Der Aufbau wird in ein Karosserieteil eingelegt und mittels einfachen Stempel oder Werkzeug umgeformt und an das Bauteil angedrückt bevor oder während das härtbare Harz, welches bereits im Aufbau vorhanden sein oder während bzw. nach dem Schließvorgang injiziert werden kann, unterschiedlich stark aushärtet. Anschließend und/oder während der Formgebung wird das härtbare Harz vernetzt und damit eine Verstärkungsschicht im Karosseriebauteil gebildet, welche mindestens zwei Bereiche mit unterschiedlicher Festigkeit aufweist.

In einer weiteren Ausführungsform kann die Verstärkungsschicht durch Modifikation zusätzliche Funktionen übernehmen. Beispiele umfassen eine Funktion als elastische Crashschicht, als Ausgleichsschicht für unterschiedliche Längenausdehnung der Verbundschichten, oder als Korrosionsschutzschicht.

In einer weiteren Ausführungsform wird das härtbare Harz aufgeschäumt.

In einer weiteren Ausführungsform umfasst die Verstärkungsschicht einen Aufbau mit Glasfasermatten, Fasern, Geweben oder Textilen, welche eine Aushärtung der Verstärkungsschicht von innen oder eine Aushärtung bestimmter Komponenten und Bereiche der Verstärkungsschicht ermöglichen. Dies kann beispielsweise durch gezielte Vorbeschichtung bzw. Einmischen von Faseranteilen die Licht übertragen und das Harz entsprechend dem Fasergehalt stärker und schwächer ausleuchten. Damit lässt sich eine Reaktion der Komponenten gezielt steuern.

In einer weiteren Ausführungsform umfasst mindestens eine Verstärkungsschicht eine Wabe, die über eine getränkte Faserlage mit einer Deckschicht verbunden wird.

In einer anderen Ausführungsform wird ein mit einem aushärtbaren Harz getränktes Abstandstextil als mindestens eine Verstärkungsschicht verwendet.

In einer weiteren Ausführungsform sind Verstärkungsrohre durch härtende Komponenten in die Verstärkungsschicht eingebettet. Diese Ausführungsform kann beispielsweise Anwendung finden in Fahrzeugprofilen, z.B. Schweller- oder crashrelevanten Profilen, oder in Rohren. Eine Ausführungsform umfasst ein Crashrohr in der A-Säule.

Ein solches Verstärkungsrohr kann zusätzlich auch als Verteiler für Flüssigkeiten oder Gase genutzt werden, oder auch als Leerrohr für später montierte Kabelführungen dienen.

In einer Ausführungsform weist das Faserverbundmaterial eine strahlenhärtbare Polymermatrixkomponente auf. In einer Ausführungsform ist die strahlenhärtbare Polymermatrixkomponente durch UV-Strahlung härtbar.

In einer Ausführungsform werden als Polymermatrixkomponente des Faserverbundmaterials Polymerzusammensetzungen eingesetzt, welche sowohl hinsichtlich des Polymeraufbaus als auch der Strahlungsdosis ein einstellbares Aushärtungsverhalten aufweisen. Dadurch ist es möglich, Härte und/oder Elastizität der Verstärkungsmatrix den jeweils geforderten Verstärkungsgraden anzupassen.

In einer speziellen Ausführungsform wird die Adhäsion einer UVvernetzbaren Polymerzusammensetzung so eingestellt, dass die Adhäsion des Polymers an dem metallischen Fahrzeugbauteil einen Beitrag zum Verstärkungsverhalten leistet.

Eine weitere Ausführungsform weist demgegenüber nur eine begrenzte Adhäsion an dem metallischen Fahrzeugbauteil auf, der Energieabbau beim Crash wird dabei formschlüssig auf die Polymerzusammensetzung übertragen.

Gegenüber thermisch- oder 2-komponentig aushärtbaren Matrixpolymeren besteht der Vorteil einer strahlenhärtbaren Polymermatrixkomponente in der signifikant erhöhten Vernetzungsgeschwindigkeit, so dass die Produktivität bei der Fertigung der Crashelemente gesteigert werden kann.

Ein weiterer Vorteil ist, dass abhängig von der gewählten Strahlungsdosis und der Verweilzeit während der Bestrahlung das Festigkeitsverhalten der gesamten Matrix reproduzierbar eingestellt werden kann.

In einer Ausführungsform enthält die strahlenhärtbare Polymermatrixkomponente mindestens ein strahlenhärtbares (Urethan)-(Meth)acrylat, welches erhältlich ist durch die Umsetzung eines NCO-funktionellen Präpolymers mit einem molaren Überschuss hydroxy- und/oder aminmodifizierter (Meth)acrylate. Optional enthält sie mindestens ein säuremodifiziertes (Meth) Acrylat-Monomer oder (Meth) Acrylat-Oligomer mit einer Säurezahl im Bereich von 50 bis 400 mg KOH/g. Weiterhin enthält die strahlenhärtbare Polymermatrixkomponente mindestens einen Photoinitiator.

In einer Ausführungsform wird eine UV-härtbare Polymermatrixkomponente eingesetzt, welche mindestens ein UV-härtbares (Urethan)-(Meth)acrylat, erhältlich durch die Umsetzung eines NCO-funktionellen Präpolymers mit einem molaren Überschuss hydroxy- und/oder aminmodifizierter (Meth)acrylate und mindestens einen Photoinitiator enthält. Optional ist mindestens ein säuremodifiziertes (Meth) Acrylat-Monomer oder Oligomer mit einer Säurezahl von 50 bis 400 mg KOH/g enthalten.

In einer Ausführungsform weist die Polymermatrixkomponente nach Aushärtung einen E-Modul im Bereich von 5 bis 1000 MPa auf. Die Messung des E-Moduls kann gemäß der DIN EN ISO 527 erfolgen. In einer Ausführungsform wird der gesamte Faseraufbau (Polymermatrix, Fasermaterial) vor der Aushärtung mit diesem Matrixharz getränkt.

In einer Ausführungsform beträgt die Schichtdicke der Verstärkungsschicht 0,1 bis 3 mm (vor der Aushärtung). Diese Schichtdicke kann in einem Schritt ausgehärtet werden.

In einer Ausführungsform wird als Strahlungsquelle UV-Licht mit einer Wellenlänge im Bereich von 220 bis 480 nm verwendet, wobei vorzugsweise 395 nm LED-Strahler oder Ga-dotierte Mitteldruckstrahler zum Einsatz kommen.

Die Bestrahlungsdosis kann in einem Bereich von 200 - 5000 mJ/cm² variiert werden, abhängig von den Details der Formulierung und dem geforderten Verstärkungsverhalten.

Die vorliegende Erfindung betrifft auch ein Verfahren zur Herstellung eines erfindungsgemäßen Strukturbauteils. Das Verfahren umfasst das Bereitstellen mindestens eines zu verstärkenden Elements; das Anbringen einer Schicht eines Fasermaterials an einer Oberfläche des zu verstärkenden Elements; das Tränken des Fasermaterials mit einer strahlenhärtbaren Polymermatrixkomponente. In einer Ausführungsform wird der gesamte Faseraufbau (Polymermatrix, Fasermaterial) mit diesem Matrixharz vor der Aushärtung getränkt. Das Verfahren umfasst weiterhin das Erzeugen einer Verstärkungsschicht aus Faserverbundmaterial durch Aushärten der strahlenhärtbaren Polymermatrixkomponente mittels Bestrahlung. Dabei werden die Bestrahlungsbedingungen so gewählt, dass in der Verstärkungsschicht wenigstens zwei Bereiche unterschiedlicher Festigkeit entstehen und die Grenzen zwischen den Bereichen unterschiedlicher Festigkeit im Wesentlichen senkrecht zur Oberfläche des zu verstärkenden Elements verlaufen.

In einer Ausführungsform des Verfahrens enthält die strahlenhärtbare Polymermatrixkomponente mindestens ein strahlenhärtbares (Urethan)-(Meth)acrylat, welches erhältlich ist durch die Umsetzung eines NCO-funktionellen Präpolymers mit einem molaren Überschuss hydroxy- und/oder aminmodifizierter (Meth)acrylate; und mindestens einen Photoinitiator. Optional enthält die strahlenhärtbare Polymermatrixkomponente mindestens ein säuremodifiziertes (Meth) Acrylat-Monomer oder (Meth) Acrylat-Oligomer mit einer Säurezahl von 50 bis 400 mg KOH/g.

In einer Ausführungsform des Verfahrens wird die strahlenhärtbare Polymermatrixkomponente unter Verwendung von UV-Licht mit einer Wellenlänge im Bereich von 220 bis 480 nm ausgehärtet. In einer speziellen Ausführungsform wird die strahlenhärtbare Polymermatrixkomponente mittels eines 395 nm LED-Strahlers oder eines Ga-dotierten Mitteldruckstrahlers ausgehärtet.

Die vorliegende Erfindung betrifft auch die Verwendung eines erfindungsgemäßen Strukturbauteils. Das erfindungsgemäße Strukturbauteil kann als Fahrzeug- und/oder Fahrwerkstruktur eines Kraftfahrzeugs verwendet werden. In einer Ausführungsform findet es Verwendung als im Crashfall tragende Fahrzeugstruktur wie Bodenblech, Längsträger, Crashbox, Querträger, Schweller, A-, B-, C-, D-Säule, Querlenker oder Torsionsträger.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen und die nachfolgenden Beispielen weiter beschrieben. Es zeigt:
- Fig. 1: in einer schematischen Schnittdarstellung eine Ausführungsform des erfindungsgemäßen Strukturbauteils, wobei Fig. 1 a) das Bauteil vor einem Crash und Fig. 1b) das Bauteil nach einem Crash zeigt;
- Fig. 2: in einer schematischen Darstellung eine Draufsicht einer Ausführungsform des erfindungsgemäßen Strukturbauteils.

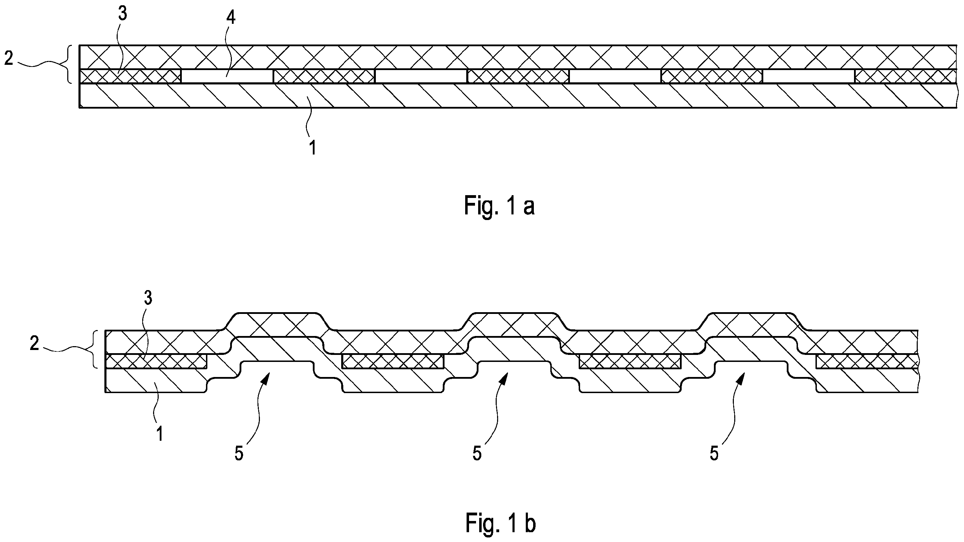

Fig. 1 zeigt in einer schematischen Schnittdarstellung eine Ausführungsform des erfindungsgemäßen Strukturbauteils, mit einem zu verstärkenden Element 1 und einer Verstärkungsschicht 2. Die Verstärkungsschicht 2 weist Bereiche 3 hoher Festigkeit bzw. starker Haftung an dem zu verstärkenden Element 1 auf, sowie Bereiche 4 niedriger Festigkeit bzw. schwacher Haftung an dem zu verstärkenden Element 1. Die Grenze zwischen den Bereichen 3 und 4 verläuft senkrecht zur Oberfläche des zu verstärkenden Elements 1. Fig. 1 a) zeigt das Bauteil vor einem Crash und Fig. 1b) das Bauteil nach einem Crash, der zum Versagen bzw. der Deformation des Strukturbauteils an den Deformationsstellen 5 geführt hat. Wie in Fig. 1 b) gezeigt, erfolgt bei einem Aufprall das Versagen des Strukturbauteils in den Bereichen 4 geringer Festigkeit bzw. schwacher Haftung zwischen Verstärkungsschicht 2 und zu verstärkendem Element 1, was zu einer Faltung des Strukturbauteils führt.

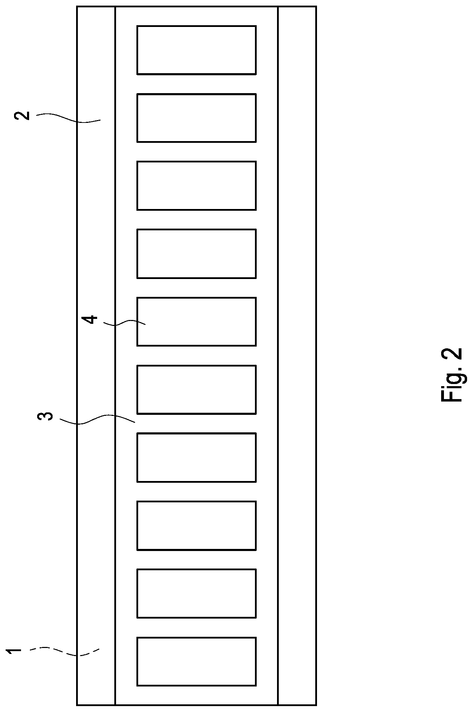

Fig. 2 zeigt in einer schematischen Darstellung eine Draufsicht einer Ausführungsform des erfindungsgemäßen Strukturbauteils, mit einem zu verstärkenden Element 1 und einer Verstärkungsschicht 2. Die Verstärkungsschicht 2 weist Bereiche 3 hoher Festigkeit bzw. starker Haftung an dem zu verstärkenden Element 1 auf, sowie Bereiche 4 niedriger Festigkeit bzw. schwacher Haftung an dem zu verstärkenden Element 1. In der dargestellten Ausführungsform sind die Bereiche 3 leiterförmig in der Verstärkungsschicht 2 angeordnet. Eine solche Struktur lässt sich beispielsweise durch Belichten eines strahlenhärtbaren Reaktivpolymers durch eine Maske hindurch erzeugen.

### Beispiele

### Beispiel 1

25 g Polypropylenglykol mit einer zahlenmittleren Molmasse von 1000 g/mol (PPG1000, OH-Zahl 110 mg KOH/g; CAS-Nr. 25322-69-4) wurden in einem Glasreaktor mit Rührer mit 5 g eines Polyesters mit einer zahlenmittleren Molmasse von 3500 g/mol (OH-Zahl 27-34 mg KOH/g; CAS-Nr. 25212-06-0) aufgeschmolzen, gemischt und bei 130°C im Vakuum getrocknet. Anschließend erfolgte die Zugabe von 10 g MDI (Diphenylmethan-4,4-diisocyanat; CAS-Nr. 101-68-8) und die Reaktion des Isocyanats mit dem PPG/Polyestergemisch erfolgte bei ca. 120 °C. Nach Beendigung der Reaktion wurde ein Präpolymer mit einem NCO-Gehalt von 3% erhalten (Titration nach Spiegelberger; EN ISO 11909).

Im nächsten Schritt wurden 20 g eines OH-funktionellen Acrylats mit einer OH-Zahl von ca. 115 mg KOH/g zugegeben (Pentaerythrittri-/tetraacrylat; CAS-Nr. 1245638-61-2) und dieses mit dem NCO-haltigem Präpolymer unter Spülung mit Trockenluft umgesetzt. Nach 60 -80 Minuten wurde kein Isocyanat mehr in der Schmelze gefunden. Anschließend erfolgte zur Einstellung der mechanischen Eigenschaften die Zugabe von 38 g Füllstoff (Aluminiumoxid mit D50 = 50 µm; CAS-Nr. 1344-28-1; und Nepheline Syenite mit D50 = 10 -20 µm; CAS-Nr. 37244-96-5), wobei beide Materialien im Masseverhältnis 1 : 1 zugegeben wurden. Als Photoinitiator wurde 1 g 2,4,6-Trimethylbenzoyldiphenylphosphinoxid (CAS- Nr. 75980-60-8) zugegeben.

Mit diesem Polymer wurde ein Glasfaservlies getränkt und als Verstärkung in ein Crashelement analog Fig. 1 eingebracht und mit einer Dosis von 5000 mJ/cm² (Ga- Strahler) vernetzt. Das vernetzte Polymer wies einen E-Modul von 950 MPa auf (entspricht Bereich 3 in Fig. 1).

### Beispiel 2

Ein Glasfaservlies analog Beispiel 1 wurde mit einer Dosis von 300 mJ/cm² (Ga-Strahler) vernetzt. Dieses Polymer wies einen E-Modul von 150 MPa auf (entspricht Bereich 4 in Fig. 1).

### Beispiel 3

30 g Polypropylenglykol mit einer zahlenmittleren Molmasse von 2000 g/mol (PPG2000, OH-Zahl 55 mg KOH/g; CAS-Nr. 25322-69-4) wurden in einem Glasreaktor mit Rührer mit 10 g eines Polyesters (Dodecansäure-1,6-hexandiol-Copolymer) mit einer zahlenmittleren Molmasse von 3750 g/mol (OH-Zahl 27 -33 mg KOH/g; CAS-Nr. 61488-13-9) aufgeschmolzen, gemischt und bei 130°C im Vakuum getrocknet. Anschließend erfolgte die Zugabe von 7 g IPDI (Isophorondiisocyanat; CAS-Nr. 4098-71-9) und die Reaktion des Isocyanats mit dem PPG/Polyestergemisch bei ca. 120 °C. Zur Beschleunigung der Reaktion wurden 0,1 g DBTL (Dibutylzinndilaurat; CAS-Nr. 77-58-7) zugegeben. Nach Beendigung der Reaktion wurde ein Präpolymer mit einem NCO-Gehalt von 2,5% (Titration nach Spiegelberger; EN ISO 11909) erhalten.

Im nächsten Schritt wurden 15 g eines OH-funktionellen Acrylats mit einer OH-Zahl von ca. 150 zugegeben (Polypropylenglykol-Monomethacrylat, CAS-Nr. 39420-45-6) und dieses mit dem NCO-haltigen Präpolymer unter Spülung mit Trockenluft umgesetzt. Nach 60 -80 Minuten wurde kein Isocyanat mehr in der Schmelze gefunden. Anschließend erfolgte die weitere Modifizierung der Formulierung zur Einstellung von Viskosität und Adhäsion durch die Zugabe weiterer Acrylate: 10 g 2-Hydroxy-3-phenoxypropylacrylat (CAS-Nr. 16969-10-1); 10 g Acrylsäureester von ethoxyliertem Propylidyntrimethanol (CAS-Nr. 28961-43-5); 10 g Isobornylacrylat (exo-1,7,7-trimethylbicyclo[2.2.1]hept-2-yl acrylat; CAS-Nr. 5888-33-5); und 5 g Phosphorsäre-2-hydroxyethylmethacrylatester (CAS-Nr. 52628-03-2). Als Photoinitiator wurden 2,9 g 2,4,6-Trimethylbenzoyldiphenylphosphinoxid (CAS- Nr. 75980-60-8) zugesetzt.

Mit diesem Polymer wurde ein Glasfaservlies getränkt und als Verstärkung in ein Crashelement analog Fig. 1 eingebracht und mit einer Dosis von 5000 mJ/cm² (Ga- Strahler) vernetzt. Das vernetzte Polymer wies einen E-Modul von 20 MPa auf (entspricht Bereich 3 in Fig. 1).

### Beispiel 4

Ein Glasfaservlies analog Beispiel 3 wurde mit einer Dosis von 250 mJ/cm² (Ga-Strahler) vernetzt. Dieses Polymer wies einen E-Modul von 5 MPa auf (entspricht Bereich 4 in Fig. 1).

4. Ein Glasfaservlies analog Beispiel 3 wird mit einer Dosis von 250 mJ/cm² (Ga-Strahler) vernetzt Dieses Polymer weist einen E-Modul von 5 MPa auf.

### Bezugszeichenliste

1 zu verstärkendes Element
2 Verstärkungsschicht
3 Bereich hoher Festigkeit bzw. starker Haftung
4 Bereich niedriger Festigkeit bzw. schwacher Haftung
5 Deformationsbereich

## Patentansprüche

1. Strukturbauteil, insbesondere für ein Kraftfahrzeug, umfassend mindestens ein zu verstärkendes Element (1) und mindestens eine mit einer Oberfläche des Elements verbundene Verstärkungsschicht (2), die aus einem Faserverbundmaterial besteht, das eine strahlenhärtbare Polymermatrixkomponente aufweist, wobei die Verstärkungsschicht (2) wenigstens zwei Bereiche (3, 4) unterschiedlicher Festigkeit aufweist und die Grenzen zwischen den Bereichen unterschiedlicher Festigkeit im Wesentlichen senkrecht zur Oberfläche des zu verstärkenden Elements (1) verlaufen.

2. Strukturbauteil nach Anspruch 1, wobei das Faserverbundmaterial eine strahlenhärtbare Polymermatrixkomponente aufweist, enthaltend:
(a) mindestens ein strahlenhärtbares (Urethan)-(Meth)acrylat, welches erhältlich ist durch Umsetzung eines NCO-funktionellen Präpolymers mit einem molaren Überschuss hydroxy- und/oder aminmodifizierter (Meth)acrylate;
(b) optional mindestens ein säuremodifiziertes (Meth) Acrylat-Monomer oder (Meth) Acrylat-Oligomer mit einer Säurezahl von 50 bis 400 mg KOH/g; und
(c) mindestens einen Photoinitiator.

3. Strukturbauteil nach Anspruch 2, bei dem die Polymermatrixkomponente nach Aushärtung einen E-Modul im Bereich von 5 bis 1000 MPa aufweist.

4. Strukturbauteil nach einem der Ansprüche 1 bis 3, bei dem die Schichtdicke der Verstärkungsschicht (2) 0,1 bis 3 mm beträgt.

5. Verfahren zur Herstellung eines Strukturbauteils, insbesondere für ein Kraftfahrzeug, umfassend
(a) Bereitstellen mindestens eines zu verstärkenden Elements (1);
(b) Anbringen einer Schicht eines Fasermaterials an einer Oberfläche des zu verstärkenden Elements;
(c) Tränken des Fasermaterials mit einer strahlenhärtbaren Polymermatrixkomponente;
(d) Erzeugen einer Verstärkungsschicht (2) aus Faserverbundmaterial durch Aushärten der strahlenhärtbaren Polymermatrixkomponente mittels Bestrahlung, wobei die Bestrahlungsbedingungen so gewählt werden, dass in der Verstärkungsschicht wenigstens zwei Bereiche (3,4) unterschiedlicher Festigkeit entstehen und die Grenzen zwischen den Bereichen unterschiedlicher Festigkeit im Wesentlichen senkrecht zur Oberfläche des zu verstärkenden Elements (1) verlaufen.

6. Verfahren nach Anspruch 5, bei dem die strahlenhärtbare Polymermatrixkomponente
(a) mindestens ein strahlenhärtbares (Urethan)-(Meth)acrylat, welches erhältlich ist durch Umsetzung eines NCO-funktionellen Präpolymers mit einem molaren Überschuss hydroxy- und/oder aminmodifizierter (Meth)acrylate;
(b) optional mindestens ein säuremodifiziertes (Meth) Acrylat-Monomer oder (Meth) Acrylat-Oligomer mit einer Säurezahl von 50 bis 400 mg KOH/g; und
(c) mindestens einen Photoinitiator enthält.

7. Verfahren nach Anspruch 5 oder 6, bei dem die strahlenhärtbare Polymermatrixkomponente unter Verwendung von UV-Licht mit einer Wellenlänge im Bereich von 220 bis 480 nm ausgehärtet wird.

8. Verfahren nach Anspruch 7, bei dem die strahlenhärtbare Polymermatrixkomponente mittels eines 395 nm LED-Strahlers oder eines Ga-dotierten Mitteldruckstrahlers ausgehärtet wird.

9. Verwendung eines Strukturbauteils nach einem der Ansprüche 1 bis 4 als im Crashfall tragende Fahrzeugstruktur, wie Bodenblech, Längsträger, Crashbox, Querträger, Schweller, A-, B-, C-, D-Säule, Querlenker oder Torsionsträger.

## Claims

1. Structural component, particularly for a motor vehicle, comprising at least one element (1) to be reinforced and at least one reinforcing layer (2), bonded with a surface of the element, which consists of a fibre composite material which has a radiation-curable polymer matrix component, wherein the reinforcing layer (2) has at least two regions (3, 4) of different strength and the borders between the regions of different strength extend substantially perpendicularly to the surface of the element (1) to be reinforced.

2. Structural component according to claim 1, wherein the fibre composite material has a radiation-curable polymer matrix component, containing:
a) at least one radiation-curable (urethane)-(meth)acrylate, which can be obtained by converting an NCO-functional prepolymer with a molar excess of hydroxy-and/or amine-modified (meth)acrylate;
b) optionally at least one acid-modified (meth)acrylate monomer or (meth)acrylate oligomer with an acid value of 50 to 400 mg KOH/g; and
c) at least one photoinitator.

3. Structural component according to claim 2, in which the polymer matrix component after curing has an E-modulus in the range from 5 to 1000 MPa.

4. Structural component according to any of claims 1 to 3, in which the layer thickness of the reinforcing layer (2) is 0.1 to 3 mm.

5. Method for producing a structural component, in particular for a motor vehicle, comprising
a) providing at least one element (1) to be reinforced;
b) applying a layer of a fibre material to a surface of the element to be reinforced;
c) saturating the fibre material with a radiation-curable polymer matrix component;
d) generating a reinforcing layer (2) from fibre composite material by curing the radiation-curable polymer matrix component by means of radiation, wherein the radiation conditions are selected such that in the reinforcing layer at least two regions (3, 4) of different strength result, and the borders between the regions of different strength extend substantially perpendicularly to the surface of the element (1) to be reinforced.

6. Method according to claim 5, in which the radiation-curable polymer matrix component contains
a) at least one radiation-curable (urethane)-(meth)acrylate, which can be obtained by converting an NCO-functional prepolymer with a molar excess of hydroxy-and/or amine-modified (meth)acrylate;
b) optionally at least one acid-modified (meth)acrylate monomer or (meth)acrylate oligomer with an acid value of 50 to 400 mg KOH/g; and
c) at least one photoinitator.

7. Method according to claim 5 or 6, in which the radiation-curable polymer matrix component is cured by using UV light with a wavelength in the range from 220 to 480 nm.

8. Method according to claim 7, in which the radiation-curable polymer matrix component is cured by means of a 395 nm LED radiator or a Ga-doped medium pressure radiator.

9. Use of a structural component according to any of claims 1 to 4 as a vehicle structure which has a bearing function in the event of a crash, such as floor plate, longitudinal beam, crashbox, transverse beam, A column, B column, C column, D column, wishbone or torsion beam.

## Revendications

1. Composant de structure, en particulier pour un véhicule automobile, comprenant au moins un élément à renforcer (1) et au moins une couche de renforcement (2) liée à une surface de l'élément, qui est consiste en un matériau composite fibreux, qui présente un composant de matrice polymère durcissable par rayonnement, dans lequel la couche de renforcement (2) présente au moins deux zones (3, 4) de résistance différente et les limites entre les zones de résistance différente s'étendent sensiblement perpendiculairement à la surface de l'élément à renforcer (1).

2. Composant de structure selon la revendication 1, dans lequel le matériau composite fibreux présente un composant de matrice polymère durcissable par rayonnement, contenant :
(a) au moins un (uréthane)-(méth)acrylate durcissable par rayonnement, lequel peut être obtenu par réaction d'un prépolymère à fonction NCO avec un excès molaire de (méth)acrylates modifiés par des groupes hydroxy et/ou amine ;
(b) facultativement au moins un monomère ou oligomère de (méth)acrylate modifié par un acide avec un indice d'acide de 50 à 400 mg de KOH/g ; et
(c) au moins un photo-initiateur.

3. Composant de structure selon la revendication 2, dans lequel le composant de matrice polymère présente un module d'élasticité après durcissement dans la plage de 5 à 1 000 MPa.

4. Composant de structure selon l'une quelconque des revendications 1 à 3, dans lequel l'épaisseur de couche de la couche de renforcement (2) est comprise entre 0,1 et 3 mm.

5. Procédé de fabrication d'un composant de structure, en particulier pour un véhicule automobile, comprenant les étapes consistant à
(a) fournir au moins un élément (1) à renforcer ;
(b) appliquer une couche d'un matériau fibreux sur une surface de l'élément à renforcer ;
(c) imprégner le matériau fibreux avec un composant de matrice polymère durcissable par rayonnement ;
(d) générer une couche de renforcement (2) en matériau composite fibreux par durcissement du composant de matrice polymère durcissable par rayonnement au moyen d'un rayonnement, dans lequel les conditions de rayonnement sont sélectionnées de sorte qu'au moins deux zones (3, 4) de résistance différente sont créées dans la couche de renforcement et que les limites entre les zones de résistance différente sont sensiblement perpendiculaires à la surface de l'élément à renforcer (1).

6. Procédé selon la revendication 5, dans lequel le composant de matrice polymère durcissable par rayonnement contient
(a) au moins un (uréthane)-(méth)acrylate durcissable par rayonnement, lequel peut être obtenu par réaction d'un prépolymère à fonction NCO avec un excès molaire de (méth)acrylates modifiés par des groupes hydroxy et/ou amine ;
(b) facultativement au moins un monomère ou oligomère de (méth)acrylate modifié par un acide avec un indice d'acide de 50 à 400 mg de KOH/g ; et
(c) au moins un photo-initiateur.

7. Procédé selon la revendication 5 ou 6, dans lequel le composant de matrice polymère durcissable par rayonnement est durci en utilisant de la lumière UV avec une longueur d'onde dans la plage de 220 à 480 nm.

8. Procédé selon la revendication 7, dans lequel le composant de matrice polymère durcissable par rayonnement est durci en utilisant un émetteur LED de 395 nm ou un émetteur moyenne pression dopé au Ga.

9. Utilisation d'un composant de structure selon l'une quelconque des revendications 1 à 4 en tant que structure de véhicule de support en cas de collision, telle qu'une plaque de plancher, une poutre longitudinale, une boîte de collision, une poutre transversale, un seuil, un pilier A, B, C, D, un bras transversal ou une poutre de torsion.
